# EUROPEAN PATENT SPECIFICATION

(11) **EP 0 198 170 B1**
(45) Date of publication and mention of the grant of the patent: **05.01.1994**
(21) Application number: 86101917.2
(22) Date of filing: 14.02.1986
(51) Int. Cl.: G06F 11/00, G06F 11/26

(54) **A monitor circuit**
Überwachungsschaltung
Circuit moniteur

(30) Priority: 16.02.1985 JP 29034/85
(43) Date of publication of application: 22.10.1986
(73) Proprietor: OMRON TATEISI ELECTRONICS CO., Kyoto 616 (JP)
(72) Inventor: Kato, Yukio Omron Tateisi Electronics Co., Nagaokakyo-City Kyoto 617 (JP)
(74) Representative: Wilhelms, Rolf E., Dr.

(56) References cited:
- FR-A- 2 332 570
- US-A- 3 497 685
- US-A- 3 710 350

## Description

This invention relates to a monitor circuit, more particularly to a monitor circuit for use with an input/output bus of a data processing device such as a programmable controller.

A programmable controller ( hereinafter referred to as PC ) normally has a bus gate circuit connected between a data bus of a CPU and an input/output bus connected to input/output units. When accessing the input/output units, the CPU issues an instruction to open the bus gate circuit. The input/output units comprises a plurality of input units and output units. Such signal sources as limit switches, photo-electric switches, and proximity switches are connected to the input units and such output devices as motors, electromagnetic valves, and pumps are connected to the output units.

In this way, the input/output unit plays a role of an interface connecting the PC to the equipment to be controlled and constitutes the portion which is subject to the worst electric environment in each component of the PC. Accordingly, it is of very importance to design the PC in such a manner that neither the input/ output unit nor input/output bus are protected against malfunction caused by external noises.

In the event an external noise appears on the input/ output bus during the time when the CPU transmits an output data to an output unit or receives an input data from an input unit, the input/output data may be adversely affected, thus causing malfunction to the PC.

It is well known that such disturbance of the input/output bus takes place during the operation of the PC provided that the input/output unit is attached to or detached from the connector of the input/output bus. Accordingly, the conventional PC has been designed to prohibit the attachment and detachment of the input/output unit during its operation.

However, it is very convenient if a failed unit is replaceable under the condition in which other units are normally operated.

From US-A-3 497 685 there is known a monitor circuit comprising means for transmitting dummy data through a circuit to an output bus connected to a CPU during the time when a gate circuit connected between a data bus and the output bus is closed, and means for judging whether or not the dummy data are correctly transmitted to the output bus under the operation of the transmitting means.

The monitor circuit described in US-A-3 497 685 comprises:
- storage means for storing dummy data used for testing
- gate means connected to said storage means for transmitting said dummy data to output bus means
- coincidence circuit means for comparing output dummy data with output data stored in said storage means.

It is a primary object of this invention to provide a monitor circuit capable of detecting the disturbance of the input/output bus without causing additional burden to a CPU.

This object is accomplished by a monitor circuit as defined in claim 1.

Other objects and numerous advantages of the monitor circuit according to this invention will become apparent from the following description taken in conjunction with the accompanying drawings, in which:
Fig. 1 is a circuit diagram showing the whole construction of a PC as a preferred embodiment of this invention;
Fig. 2 is a detailed view of a monitor circuit of Fig. 1;
Fig. 3 is a flow chart diagram showing the whole operation of the PC of Fig. 1;
Fig. 4 is a detailed flow chart diagram of the step of input/output Refresh of Fig. 3; and
Fig. 5 is a time chart showing the operation of the PC of Fig. 1.

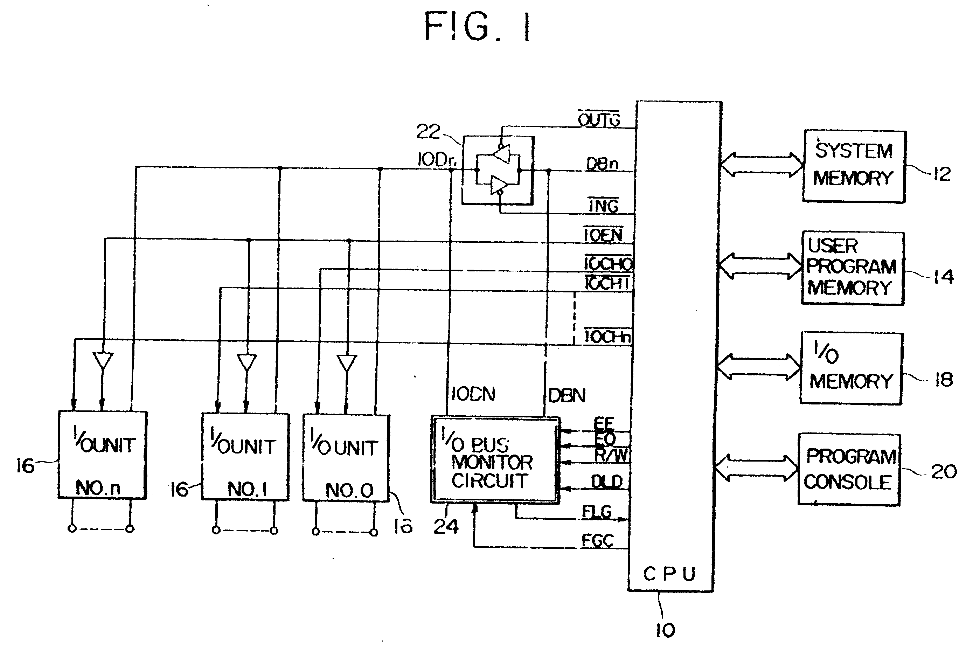

Referring now, to Fig. 1 there is shown a whole construction of a PC. A CPU 10 is constituted by MOTOROLA 6809 to which a system memory 12 for storing a system program, user program memory 14, input/output (I/O) memory 18, and program console 20 are connected respectively. Each I/O unit 16 NO. 0 through N plays a role of either input unit or output unit. A bus gate circuit 22 is connected between a data bus DBN connected to CPU 10 and I/O bus IODN connected to each I/O unit. A monitor circuit 24 is connected between the output and input of bus gate circuit 22.

Although DBN, IODN, and bus gate circuit 22 are shown to handle only one bit for the purpose of the simplification of description, actually they will be provided corresponding to the number of the output terminal of each I/O unit.

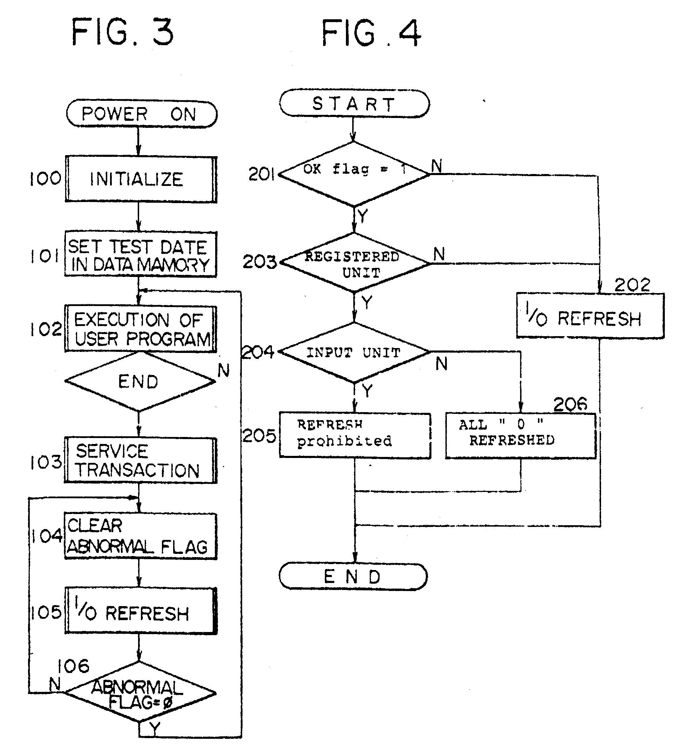

Referring to Fig. 3, the general operation of the PC is illustrated. If the PC is supplied with power from the external a.c. power source by a power switch (not shown), the operation of Fig.3 start. In a step 100, each part of the PC is initialized. The next step is also initializing step which is described hereinafter. In a step 102, a user program stored in memory 14 is executed down to its end command based on the data stored in I/O memory 18 and rewrite the output data of I/O memory 18 according to the results of its execution.

The next step 103 is provided to display processing conditions at program console 20 or to receive various instructions therefrom. Then, an abnormal flag FLG of monitor circuit 24 is cleared by a signal FGC (step 104). The next step 105 is provided for I/O refresh processing. That is, the output data of I/O memory 18 rewriten by the execution of the user program are transferred to the corresponding output unit 16 and the latest input data of the input unit 16 are taken into the I/O memory 18 and stored therein.

After completing I/O refresh processing, it is inquired if the abnormal flag FLG is set or cleared (step 106). If the FLG remains cleared, it implies that the I/O refresh processing has been correctly completed. In this case, a sequence returns to the step 102 which is, as previously described, an execution routine of the user program. If the FLG is set, it implies that the disturbance has been caused to the I/O bus IODn during the I/O refresh processing and that the transferred data has been probably changed. In this case, a sequence flows to the step 104 to 105, and the I/O refresh processing will be retried.

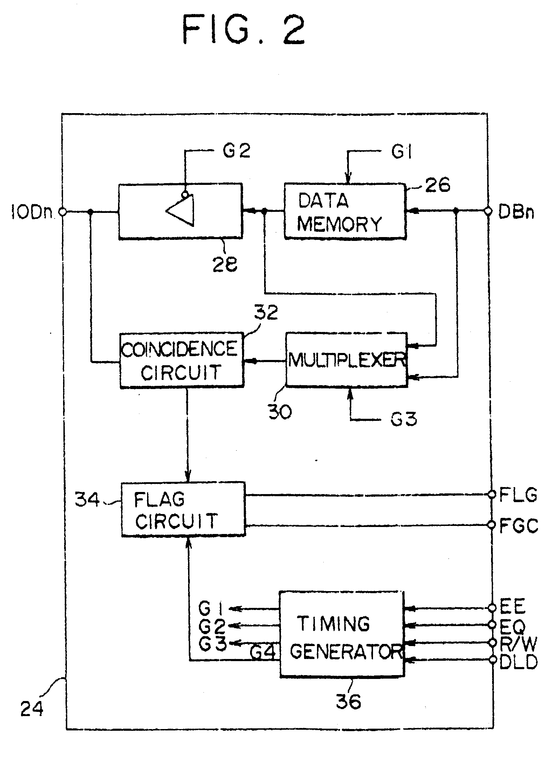

In Fig. 2, a detailed construction of monitor circuit 24 is illustrated. The monitor circuit 24 comprises data memory 26 storing a given bit pattern of dummy data, buffer circuit 28 connected between the output of memory 26 and IODn, multiplexer 30 adapted to select either dummy data from memory 26 or the data on CPU data bus DBn, coincidence circuit 32 comparing the data on IODn with the selected data by multiplexer 30, flag circuit 34 establishing the abnormal flag FLG responsive to the non-coincidence output from coincidence circuit 32, and timing generator 36 adapted to generate timing signals G1,G2,G3, and G4 based on the system clocks EE and EQ, and control signals R/W and DLD transmitted from CPU 10. The step 101 shown in Fig. 3 is a routine for setting dummy data ( test data ) into the data memory 26.

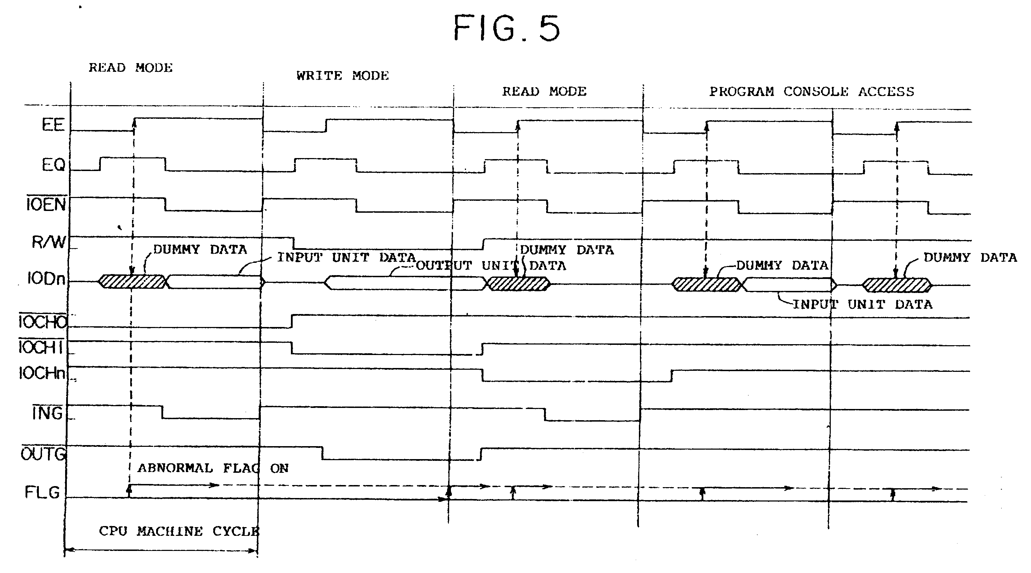

In Fig. 5, there is shown a time chart illustrating the operation of CPU 10 accessing to I/O units 16 and the opration of monitor circuit 24. Firstly described is an Access Mode ( Write Mode ) with respect to output units 16.

The CPU 10 will select by channel select signal IOCHi ( i = 0 through n ) the I/O unit 16 to be selected and open the output gate of bus gate circuit 22 by lowering the level of control signal OUTG and then transmit the output data onto data bus DBn. Then, the CPU will return the signal IOEN to its high level subsequent to lowering its level. In this way, the output data on I/O bus IODn is latched in the selected output unit 16 in synchronization with the rise of IOEN. In this Write Mode, multiplexer 30 of monitor circuit 24 is switched to select the data from DBn and buffer circuit 28 is closed. Accordingly, when CPU 10 transmit the data by opening bus gate circuit 22, the data on IODn is compared with the data on DBn in coincidence circuit 32. Unless the disturbance is caused to IODn, the both data are expected to coincide with each other, while in case such disturbance takes place, there is a possibility of causing the non-coincidence between the both data. The non-coincidence output of coincidence circuit 32 is read into flag circuit 34 with the rise of signal IOEN.

Secondly described is Access Mode ( Read Mode ) with respect to input units 16. CPU 10 will select by channel select signals IOCHi the input unit 16 to be accessed, and lower the levels of signals IOEN and ING in the latter-half portion of a CPU machine cycle. Thus, the input data of the selected input unit 16 is output to IODn, taken into DBn through bus gate circuit 22 and writen into I/O memory 18.

In this Read Mode, multiplexer 30 of monitor circuit 24 is switched to select the dummy data from data memory 26 and buffer circuit 28 is opened immediately before the levels of signals IOEN and ING are lowered. That is, the dummy data of data memory 26 is transmitted through buffer circuit 28 onto IODn immediately before the input gate of bus gate circuit 22 is opened to allow the Read Mode Access. And then, the data on IODn is compared with the data of data memory 26 in coincidence circuit 32. As previously described, unless the disturbance is caused to IODn, the both data are expected to coincide with each other, while in case such disturbance is caused there is a possibility of non-coincidence between the both data. The output of non-coincidence is read into flag circuit 34 in synchronization with the rise of clock EE.

The monitoring operation of IODn by the use of dummy data is also performed according to the same timing mentioned above when CPU 10 accesses memories 12,14 and 18 and program console 20.

Thus, in this embodiment, IODn is monitored not only by the use of dummy data when bus gate circuit 22 is closed, but by the use of the output data transmitted from CPU through DBn by opening gate circuit 22. Accordingly, the frequency of monitoring can be greatly raised, thereby causing very little overlook of disturbance.

In addition to the above-mentioned functions, the PC of this embodiment has the following functions which will enable previously described attaching and detaching of I/O units during the operation of the PC.

Prior to the replacement of a failed I/O unit 16, the unit number of the unit is registered by the use of program console 20. This input data is accepted in the step 103 ( Fig. 3 ) and stored in a table ( not shown ) of system memory 12. Then, replacement OK flag is set, and " Replacement OK " is displayed in the display of program console 20. The operator of the PC will detach the unit whose number has been registered, then attach new unit thereto. After then, the operator will input the completion of the replacement using program console 20. In response to the above operation, CPU 10 will clear the concerned data stored in the table together with the replacement OK flag after confirming the replacement has been normally completed. At the same time " Completion of Replacement " is displayed.

CPU 10 will perform the I/O refresh in a different manner in case " replacement of unit " has been registered ( during the replacement OK flag is set ). That is, referring to Fig. 4, there is shown a flow chart illustrating detailed steps of the step 105 shown in Fig. 3.

In an inquiry step 201, it is inquired if the replacement OK flag is set. If no, a sequence flows to a step 202 in which a normal I/O refresh is performed. If yes, it is inquired if the number of the accessed unit is registered ( step 203 ). If not registered, a sequence flows to the step 202 where a normal I/O refresh is performed as described above. If registered, it is inquired in an inquiry step 204 if the registered unit is an input unit. In case of an input unit. The performance of I/O refresh is prohibited to hold the corresponding input data of I/O memory 18, while in case of an output unit, all "0" data is given to the unit.

In this way, a failed unit can be excluded from the I/O refresh, in response to the registering operation prior to the replacement of the failed unit. It should be noted that I/O refresh can be completely performed because the refresh processing is repeatedly performed as previously described in the event the disturbance is caused to the I/O bus IODn due to the replacement of the failed unit. As a result, the malfanction of a PC is eliminable.

## Claims

1. A monitor circuit for an input/output bus of a control system, said monitor circuit comprising
storage means (26) for storing test data used for testing said input/output bus,
switching and selecting means (30) for receiving said test data output from said storage means (26) and for selectively providing a test data output in a first mode, and for receiving data transmitted directly thereto through a data bus and for selectively providing a data bus output in a second mode,
first gate means (28) connected to said storage means (26) and having an output connected to said input/output bus for receiving said test data from said storage means (26) and for selectively transmitting said test data into said input/output bus in said first mode during the time when second gate means (22) connected to said data bus and to said input/output bus are closed, said first gate means being closed in said second mode,
said second gate means (22) selectively transmitting said data bus output into said input/output bus in said second mode and transmitting the test data carried by said input/output bus into said data bus in said first mode, and
coincidence circuit means (32) having one input connected to said switching and selecting means (30) and another input for connection to said input/output bus for comparing in said first mode said test data carried by said input/output bus with said test data stored in said storage means (26) and transmitted from said switching and selecting means (30) and for providing a coincidence signal upon coincidence of both said test data or providing a non-coincidence signal upon non-coincidence between both said test data, or comparing in said second mode said input/output bus signal with said data bus output transmitted from said switching and selecting means (30) and providing a coincidence signal upon coincidence of both said data or a non-coincidence signal upon non-coincidence of both said data.

2. A monitor circuit according to claim 1, comprising flag circuit means (34) for establishing an abnormality flag in response to a non-coincidence signal output from said coincidence circuit means (32).

## Patentansprüche

1. Überwachungsschaltung für einen Eingabe/Ausgabe-Bus eines Steuersystems, wobei die Überwachungsschaltung
Speichermittel (26) zum Speichern von Testdaten, die zum Testen des Eingabe/Ausgabe-Busses verwendet werden,
Schalt- und Auswahlmittel (30) zum Empfangen der von den Speichermitteln (26) ausgegebenen Testdaten und zur ausgewählten Lieferung einer Testdatenausgabe in einer ersten Betriebsart, und zum Empfangen von direkt über einen Datenbus auf sie übertragenen Daten und zum ausgewählten Liefern einer Datenbusausgabe in einer zweiten Betriebsart,
erste Gate-Mittel (28), die mit den Speichermitteln (26) verbunden sind, und mit einem ersten Ausgang mit dem Eingabe/Ausgabe-Bus für den Empfang der Testdaten von den Speichermitteln (26) und für das ausgewählte Übertragen der Testdaten in den Eingabe/Ausgabe-Bus in der ersten Betriebsart während der Zeit, zu der die mit dem Datenbus und dem Eingabe/Ausgabe-Bus verbundenen zweiten Gate-Mittel (22) geschlossen sind, verbunden sind, wobei die ersten Gate-Mittel in der zweiten Betriebsart geschlossen sind,
wobei die zweiten Gate-Mittel (22) die Datenbusausgabe ausgewählt in den Eingabe/Ausgabe-Bus in der zweiten Betriebsart übertragen und die vom Eingabe/Ausgabe-Bus transportierten Testdaten in den Datenbus in der ersten Betriebsart übertragen, und
Koinzidenzschaltungsmittel (32), die mit einem Eingang mit den Schalt- und Auswahlmitteln (30) verbunden sind und einen weiteren Eingang zur Verbindung mit dem Eingabe/Ausgabe-Bus zum Vergleichen, in der ersten Betriebsart, der von dem Eingabe/Ausgabe-Bus transportieren Testdaten mit den in den Speichermitteln (26) gespeicherten und von den Schalt- und Auswahlmitteln (30) übertragenen Daten und zur Lieferung eines Koinzidenzsignals mit Koinzidenz beider Testdaten oder Lieferung eines Nicht-Koinzidenzsignals mit Nicht-Koinzidenz zwischen den beiden Testdaten, oder zum Vergleichen, in der zweiten Betriebsart, des Eingabe/Ausgabe-Bus-Signals mit der von den Schalt- und Auswahlmitteln (30) übertragenen Datenbusausgabe und zum Liefern eines Koinzidenzsignals mit Koinzidenz beider Daten oder eines Nicht-Koinzidenzsignals mit Nicht-Koinzidenz beider Daten aufweist, umfaßt.

2. Überwachungsschaltung nach Anspruch 1, welche Kennzeichenschaltungsmittel (34) zur Errichtung eines Anomaliekennzeichens ansprechend auf eine Nicht-Koinzidenzsignalausgabe der Koinzidenzschaltungsmittel (32) aufweist.

## Revendications

1. Circuit de surveillance pour un bus d'entrée/sortie d'un système de commande, ledit circuit de surveillance comportant
un moyen de stockage (26) pour stocker des données de vérification utilisées pour vérifier ledit bus d'entrée/sortie,
un moyen de commutation et de sélection (30) pour recevoir lesdites données de vérification provenant dudit moyen de stockage (26), et pour délivrer de façon sélective une sortie de données de vérification selon un premier mode, et pour recevoir les données qui y sont transmises directement par un bus de données, et pour délivrer de façon sélective une sortie de données de bus selon un second mode,
un premier moyen de porte (28) connecté audit moyen de stockage de données (26) et possédant une sortie connectée audit bus d'entrée/sortie pour recevoir lesdites données de vérification depuis ledit moyen de stockage (26), et pour transmettre de façon sélective lesdites données de vérification dans ledit bus d'entrée/sortie selon ledit premier mode, pendant la durée où des seconds moyens de porte (22) connectés audit bus de données et audit bus d'entrée/sortie sont fermés, ledit premier moyen de porte étant fermé dans ledit second mode,
lesdits seconds moyens de porte (22) transmettant de façon sélective ladite sortie du bus de données dans ledit bus d'entrée/sortie selon ledit second mode et transmettant les données de vérification acheminées par ledit bus d'entrée/sortie dans ledit bus de données selon ledit premier mode, et
un moyen de circuit de coincidence (32) possédant une entrée connectée audit moyen de commutation et de sélection (30) et une autre entrée destinée à la connexion audit bus d'entrée/sortie, pour comparer selon ledit premier mode lesdites données de vérification acheminées par ledit bus d'entrée/sortie auxdites données de vérification stockées dans ledit moyen de stockage (26) et transmises depuis ledit moyen de commutation et de sélection (30), et pour fournir un signal de coincidence lors de la coincidence desdites données de vérification, ou pour fournir un signal de non-coïncidence en cas de non-coïncidence entre lesdites données de vérification, ou pour comparer selon ledit second mode, le signal dudit bus d'entrée/sortie à la sortie dudit bus de données transmise depuis ledit moyen de commutation et de sélection (30), et fournir un signal de coincidence lors de la coincidence desdites données, ou pour fournir un signal de non-coïncidence en cas de non-coïncidence entre lesdites données.

2. Circuit de surveillance selon la revendication 1, comportant un moyen de circuit indicateur (34) pour établir un indicateur d'anomalie en réponse à la sortie d'un signal de non-coïncidence depuis ledit moyen de circuit de coincidence (32).
